# EUROPEAN PATENT APPLICATION

(11) **EP 4 578 768 A1**
(43) Date of publication of application: **02.07.2025**
(21) Application number: 23220369.5
(22) Date of filing: 27.12.2023
(51) Int. Cl.: B62D 65/02, B62D 65/12, B62D 53/06

(54) **A SYSTEM AND A METHOD THEREIN FOR LOCALIZATION OF AN ASSEMBLY LINE TOOL WITH RESPECT TO AT LEAST ONE AXLE OF A VEHICLE**

(71) Applicant: VOLVO TRUCK CORPORATION, 405 08 Göteborg (SE)
(72) Inventor: IUSTIN, Roman, 435 37 Mölnlycke (SE)
(74) Representative: Zacco Sweden AB

(57) **Abstract**

System for localizing an assembly line tool with respect to at least one axle of a vehicle located on an assembly line is provided. The assembly line comprise at least two dollies and at least one assembly line tool. The system is configured to obtain a sequence of dolly IDs according to an order of sequence of which the at least two dollies are moving along the assembly line, and associate each dolly ID in the obtained sequence of dolly IDs with a specific axle in a predetermined axle layout associated with the vehicle based on the order of sequence. The system is further configured to obtain at least a first dolly ID of a first dolly, and determine a location of the assembly line tool with respect to a specific axle in the predetermined axle layout associated with the vehicle based on the obtained first dolly ID and the specific axle associated thereto.

## Description

### TECHNICAL FIELD

The disclosure relates generally to assembly line systems. In particular aspects, the disclosure relates to a system and method therein for localizing an assembly line tool with respect to at least one axle of a vehicle located on an assembly line. In further aspects, the disclosure also relates to computer program products for performing the method and a non-transitory computer-readable storage medium. Although the disclosure may be described with respect to a particular vehicle, the disclosure is not restricted to any particular vehicle.

### BACKGROUND

In vehicles today, in particular heavy-duty vehicles such as semi-trailer vehicles or trucks for cargo transport, one or more central electronic control units, ECUs, may be implemented on-board the vehicle in order to read and collect sensor readings from various different types of wireless wheel sensors on-board the vehicle. In some cases, tire sensors may be located in or on the tires or rims on the wheels of the vehicle. The sensor data transmitted from these tire sensors may comprise, for example, tire pressure, tire temperature, tire deformation, the identity of the sensor, etc. These types of systems are conventionally referred to as Tire Pressure Monitoring Systems, TPMS, or Tire Health Systems, THS. TPMS/THS systems also normally employ Radio Frequency, RF, transmissions operating on specifically dedicated frequencies for transmitting its sensor data the on-board ECU or external sensor data receivers. In additional to such TPMS/THS systems, each tire and/or rim of a wheel may also have one or more integrated or mounted Radio Frequency Identification, RFID, sensors, i.e. RFID tags, for enabling identification of the specific tire and/or specific rim of a wheel. RFID also employs RF transmissions.

Upon assembly of the wheels on the vehicle at an assembly line, it is important know exactly in which wheel location on the vehicle each tire sensor is located. This, for example, since the TPMS/THS system in the ECU is required to be informed and calibrated about where on the chassis of the vehicle each specific tire sensor is located. One way to determine tire sensor positions on a vehicle is to manually register each tire sensor's position and input this into the central TPMS/THS system. However, due to the human factor, this manual procedure is prone to errors, as well as, time consuming and expensive.

Upon assembly of the wheels on the vehicle at an assembly line, it is also important that each specific tire is positioned on the right axle for which that specific tire is intended. Installing the wrong tires on an axle of the vehicle will result in suboptimal performance of the vehicle and the tires if unnoticed, as well as, costly and time-consuming corrective maintenance upon detection. One way of determining which specific tire should be mounted onto a particular axle is to use tires that are delivered with labels that inform the operator on the assembly line of which axle each specific tire is intended for. However, again, due to the human factor, this manual procedure is prone to errors, as well as, time consuming and expensive.

Hence, there is a need to find an system for use on an assembly line that may ensure that each specific wheel is mounted on the right axle for which it is intended. Additionally, there is a need to find an system for use on an assembly line that may determine the locations of all tire sensors on the chassis of the vehicle.

### SUMMARY

According to a first aspect of embodiments herein, the object is achieved by a system for localizing an assembly line tool with respect to at least one axle of a vehicle located on an assembly line. The assembly line comprise at least two dollies each being configured to move along the assembly line and to carry a respective axle of the vehicle being assembled on the assembly line, wherein each dolly comprises a short range wireless transmitter. The assembly line also comprise at least one assembly line tool comprising a short range wireless receiver. The system comprises processing circuitry being configured to obtain a sequence of dolly identities, IDs, according to an order of sequence of which the at least two dollies are moving along the assembly line. The processing circuitry of the system is also configured to associate each dolly ID in the obtained sequence of dolly IDs with a specific axle in a predetermined axle layout associated with the vehicle based on the order of sequence. Further, the processing circuitry of the system is configured to obtain, from the short range wireless transmitter of at least a first dolly using the short range wireless receiver of the assembly line tool, at least the first dolly ID of the at least first dolly. The processing circuitry of the system is further configured to determine a location of the assembly line tool with respect to a specific axle in the predetermined axle layout associated with the vehicle based on the obtained first dolly ID and the specific axle associated thereto.

The first aspect of the disclosure may seek to provide a system for use on an assembly line that ensures that each specific wheel is mounted on the right axle for which it is intended. A technical benefit may include that by localizing an assembly line tool with respect to at least one axle of a vehicle located on an assembly line, the location of a wheel carried by the assembly line tool with respect to at least one axle of the vehicle is inherently known. This enables the system to ensure that the wheel carried by the assembly line tool is approaching an axle of the vehicle for mounting is actually approaching the right axle of the vehicle onto which it is intended to be mounted.

Optionally in some examples, including in at least one preferred example, the at least one assembly line tool comprises either a trolley, or a spindle tool, configured to carry a wheel for fixation to an axle carried by one of the at least two dollies. Here, a technical benefit may include the possibility to use a variety of tools to obtain the at least first dolly ID of the at least first dolly at the wheel mounting stage on the assembly line. In this way, the obtaining of the at least first dolly ID may take place where it is most effective, i.e. at wheel assembly onto the vehicle.

Optionally in some examples, including in at least one preferred example, the processing circuitry of the system may be further configured to obtain, from the short range wireless receiver of the assembly line tool, tire information from a wheel carried by the at least one assembly line tool. In this case, the processing circuitry of the system may also be configured to associate the obtained tire information with the determined location of the assembly line tool with respect to the specific axle in the predetermined axle layout associated with the vehicle. Here, a technical benefit may be that it is ensured that the wheel carried by the assembly line tool is affixed to the right axle of the vehicle onto which it is intended to be mounted. Another technical benefit is that this information may be paired and later transferred to the vehicle's electronic control unit (ECU), which advantageously will reduce the time needed to ensure this information is comprised in the ECU once assembled.

Optionally in some examples, including in at least one preferred example, the processing circuitry of the system may be further configured to generate an alert signal in case the obtained tire information and the specific axle association is not compliant with an approved tire/axle combination. Here, a technical benefit may be that an operator attempting to mount a wheel to an axle of the vehicle chassis of the vehicle may be warned or alerted if there is a mismatch between the wheel and the axle onto which is attempted to be mounted, i.e. the wheel is not intended to be mounted onto that particular axle.

Optionally in some examples, including in at least one preferred example, the tire information originate from an identity tag and/or a tire sensor located in the wheel or on a rim of the wheel. Here, a technical benefit include an easy identification of sensor in the wheel at the same time as the localization of the assembly line tool. Optionally in some examples, including in at least one preferred example, the tire information may comprise on one or more sensor IDs of the identity tag and/or tire sensor, wherein the identity tag may be an Radio Frequency Identification, RFID, tag and the tire sensor may be a tire pressure/temperature sensor (TPS). Here, a technical benefit include an easy identification of RFID/TPMS sensors in the wheel at the same time as the localization of the assembly line tool. Optionally in some examples, including in at least one preferred example, the tire information may comprise one or more of: a basis state of a tire pressure/temperature sensor (TPS), a supplier ID, a type of activation/trigger mode ID, tire pressure data, tire temperature data, and battery status of a tire pressure/temperature sensor (TPS). A technical benefit may include to check the functionality and condition of the tire sensor at the same time or close in time with the other readings of the wheel's sensors at the time of mounting the wheel.

Optionally in some examples, including in at least one preferred example, the short range wireless receiver of the at least one assembly line tool is configured to receive wireless signal from the short range wireless transmitter of each dolly. Here, a technical benefit may include that the dolly IDs of the dollies on the assembly line is digitally readable by the assembly tool. Optionally in some examples, including in at least one preferred example, the predetermined axle layout comprising at least a front axle and a rear axle. Optionally in some examples, including in at least one preferred example, the system may comprise a memory containing instructions executable by the processing circuitry.

According to a second aspect of the embodiments herein, a computer-implemented method for localizing an assembly line tool with respect to at least one axle of a vehicle located on an assembly line is described. The assembly line comprises at least two dollies each being configured to move along the assembly line and to carry a respective axle of the vehicle being assembled on the assembly line, wherein each dolly comprises a short range wireless transmitter. The assembly line also comprises and at least one assembly line tool comprising a short range wireless receiver. The computer-implemented method comprises obtaining a sequence of dolly identities, IDs, according to an order of sequence of which the at least two dollies are moving along the assembly line. The computer-implemented method also comprises associating each dolly ID in the obtained sequence of dolly IDs with a specific axle in a predetermined axle layout associated with the vehicle based on the order of sequence. Further, the computer-implemented method comprises obtaining, from the short range wireless transmitter of at least a first dolly using the short range wireless receiver of the assembly line tool, the at least first dolly ID of the at least first dolly. Also, the computer-implemented method comprises determining a location of the assembly line tool with respect to a specific axle in the predetermined axle layout associated with the vehicle based on the obtained first dolly ID and the specific axle associated thereto.

Optionally in some examples, including in at least one preferred example, the computer-implemented method may comprise obtaining, from the short range wireless receiver of the assembly line tool, tire information from a tire carried by the at least one assembly line tool. Here, the computer-implemented method may also comprise associating the obtained tire information with the determined location of the assembly line tool with respect to the specific axle in the predetermined axle layout associated with the vehicle.

Optionally in some examples, including in at least one preferred example, the computer-implemented method may comprise generating an alert signal in case the obtained tire information and the specific axle association is not compliant with an approved tire/axle combination.

Effects and advantages of this second aspect is to a large extent analogous to those described above in connection with the first aspect.

According to a third aspect of the embodiments herein, a computer program product comprising program code means for performing the steps of the methods described above when said program is run on a processing circuitry of a network system or a processing circuitry of a user device, respectively, is described. According to a fourth aspect of the embodiments herein, a non-transitory computer-readable storage medium comprising instructions, which when executed on a processing circuitry of a network system or on a processing circuitry of a user device, cause the processing circuitry to perform the methods described above is described. Effects and advantages of the third and fourth aspects are to a large extent analogous to those described above in connection with the first and second aspect.

The above aspects, accompanying claims, and/or embodiments disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
**FIG. 1** is a side view of a vehicle.
**FIG. 2** is a schematic illustration of a vehicle and wheel locations thereon.
**FIG. 3** is a schematic illustrations of a vehicle having tires with tire sensors at each wheel location.
**FIG. 4** is a schematic illustration of an assembly line comprising at least one dolly carrying an axle of a vehicle and an assembly line tool carrying a wheel to mounted onto the axle of the vehicle.
**FIG. 5** is a flowchart illustrating embodiments of a method according to some embodiments.
**FIG. 6** is schematic illustration of the operation of a system according to some embodiments.
**FIG. 7** is another schematic illustration of the operation of a system according to some embodiments.
**FIG. 8** is a block diagram depicting embodiments of a system, and
**FIG. 9** illustrates a set of predetermined axle layouts associated with different vehicles.

### DETAILED DESCRIPTION

Aspects set forth below represent the necessary information to enable those skilled in the art to practice the disclosure.

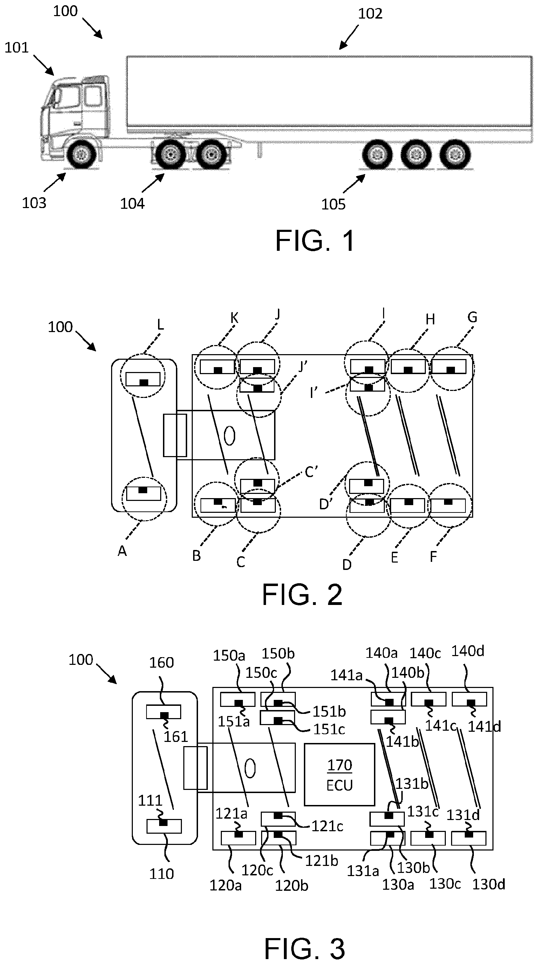

**FIG. 1** illustrates an example of a vehicle 100. In this case, the vehicle 100 is exemplified as a heavy-duty vehicle combination for cargo transport, i.e. a truck/towing vehicle 101 configured to tow a trailer unit 102 in a known manner, e.g. by a fifth wheel connection. The vehicle 100 comprises wheels 103, 104, and 105. It should be noted that with the term heavy-duty vehicle herein is meant a vehicle designed for the handling and transport of heavier objects or large quantities of cargo. The term heavy-duty vehicle may, however, also refer to a vehicle designed for use in construction, mining operations, or similar, such as, a working or construction machine. It should also be noted that even though the embodiments herein for enabling a determination of a location of a tire sensor on a chassis of a vehicle are described mainly with respect to a heavy-duty vehicle, such as, the heavy-duty vehicle combination 101, 120 in Fig. 1, the embodiments herein should not be considered restricted to this particular type of vehicle but may also be used in other types of vehicles, such as, passenger cars, commercial vehicles, busses, etc.

**FIG. 2** illustrates a first top-side view of the vehicle 100 and wheel positions A-L thereon. In this example, the wheel position A is the front left wheel position of the truck or towing vehicle 101 of the vehicle 100, while the wheel position L is the front right wheel position of the truck or towing vehicle 101 of the vehicle 100. Furthermore, the wheel positions of the trailer unit 102 ranges around the trailer unit 102 from the wheel position B for the front left wheel of the trailer unit 102 to the wheel position K of the front right wheel of the trailer unit 102. In some cases, certain wheel positions may comprise a set of twin wheels as illustrated for the wheel positions C, D, I, and J. In this case, the outermost wheel position of the set of twin wheels is referred to as C, D, I, and J, respectively, while the innermost wheel position of the set of twin wheels is referred to as C', D', I', and J'. It should also be noted that the notation of the wheel positions is merely made for sake of illustrative purposes to provide a clear and concise references to different wheel positions; in other words, this notation should not be construed as limiting to the embodiments herein.

**FIG. 3** illustrates a second top-side view of the vehicle 100 having wheels 110, 120, 130, 140, 150, 160 comprising tire sensors 111, 121, 131, 141, 151, 161 at each wheel position A-L on the vehicle 100 as described above in Fig. 2. The vehicle 100 further comprise an electronic control unit, ECU 301. In this example, the wheel 110 at the wheel position A of the truck or towing vehicle 101 of the vehicle 100 comprise at least one tire sensor 111, while the wheel 120 at the wheel position L of the truck or towing vehicle 101 of the vehicle 100 comprise at least one tire sensor 121. Similarly, each wheel 120a, 120b, 120c at the two front left wheel positions B, C, C' of the trailer unit 102 of the vehicle 100 comprise each at least one tire sensor 121a, 121b, 121c, respectively. Also, each wheel 130a, 130b, 130c, 130d at the three back left wheel positions D, D', E, F of the trailer unit 102 of the vehicle 100 comprise each at least one tire sensor 131a, 131b, 131c, 131d, respectively. Furthermore, each wheel 140a, 140b, 140c, 140d at the three back right wheel positions I, I', H, G of the trailer unit 102 of the vehicle 100 comprise each at least one tire sensor 141a, 141b, 141c. Lastly, each wheel 150a, 150b, 150c at the two front right wheel positions K, J, J' of the trailer unit 102 of the vehicle 100 comprise each at least one tire sensor 151a, 151b, 151c. The ECU 301 and each of the one or more tire sensors 111, 121, 131, 141, 151, 161 on the vehicle 100 may be part of an on-board Tire Pressure Monitor System/Tire Health System, TPMS/THS. In other words, the one or more tire sensors 111, 121, 131, 141, 151, 161 on the vehicle 100 may be TPMS/THS sensors, and the ECU 301 may be a TPMS/THS sensor reader. The one or more tire sensors 111, 121, 131, 141, 151, 161 on the vehicle 100 may also be referred to as TPMS/THS transponders. Furthermore, each tire and/or rim of each of the wheels 110, 120, 130, 140, 150, 160 may also have one or more integrated or mounted Radio Frequency Identification, RFID, sensor, i.e. RFID tag. The RFID tags (not shown) enable identification of the specific tire and/or specific rim of each of the wheels 110, 120, 130, 140, 150, 160 using radio frequency transmissions.

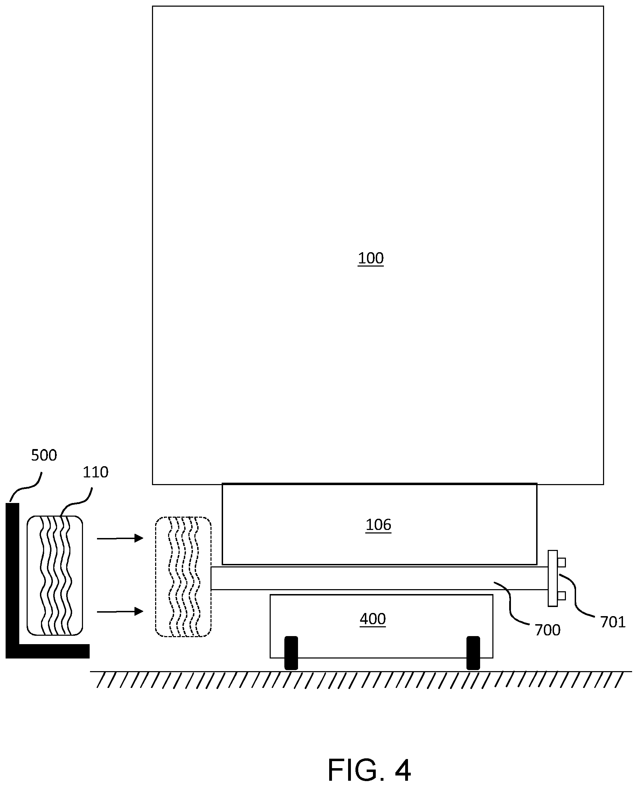

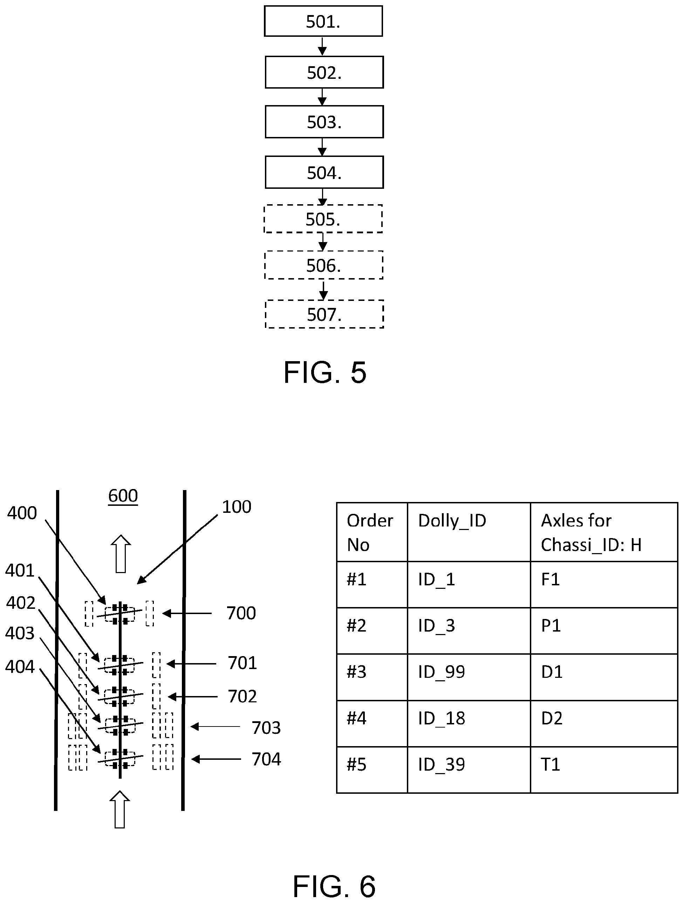

**FIG. 4** illustrates an example of how wheels 110 may be affixed to a vehicle chassis 106, or more specifically to axles 700 of the vehicle 100, on an assembly line 600, as exemplified in FIG. 6. The assembly line 600 may comprise a conveyor system facilitating the seamless movement of the axles 700 and vehicle chassis 106 of the vehicle 100 along predetermined stations. In this case, the conveyor system may use a number of dollies 400, wherein each dolly 400 is configured to move along the assembly line 600 and to carry a respective axle 700 of the vehicle 100 being assembled on the assembly line 600.

At the initial station, an automated lifting mechanism may elevate the axles 700 and vehicle chassis 106 of the vehicle 100 to a suitable working height. As each axles 700 may hang at different distances from the vehicle chassis 106, each dolly 400 may be provided with different mechanical holders (not shown) that are adapted for a specific types of axles 700. This allows for a convenient access by an wheel mounting operator to the wheel assembly and wheel hub 701 on the axles 700 along the assembly line 600. The dollies 400 may then jointly convey the axles 700 and vehicle chassis 106 of the vehicle 100 at the suitable working height along the assembly line 600.

Subsequently, specialized wheel installation devices or assembly line tools 500, such as, e.g. a wheel lifting trolley or spindle tool, may be employed by wheel mounting operators to carry a wheel 110 for fixation to an axle 700 carried by the dolly 400. To ensure secure fastening, the assembly line tools 500, potentially comprising pneumatic or electric wrenches, are utilized to affix the wheel 110 to the wheel hub 701 of the axle 700 using nuts or bolts. The assembly line tools 500 may aligns the bolt pattern on the wheel 110 with the corresponding pattern on the wheel hub of the axle 700, promoting accurate placement. The assembly line tools 500 may also comprise a pneumatic system and/or electric motors to lift, carry and rotate the wheel 110 in order to affix the wheel 110 to the wheel hub 701 of the axle 700.

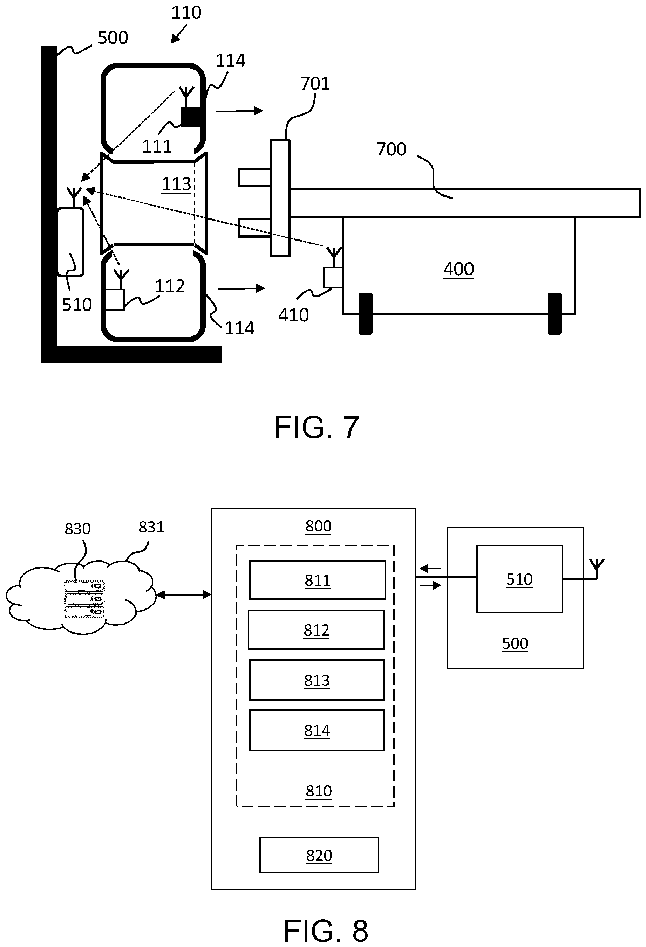

Embodiments of a computer-implemented method for localizing an assembly line tool 500 with respect to at least one axle 700-704 of a vehicle 100 located on an assembly line 600, will now be described with reference to the flowchart depicted in **FIG.** 5. The assembly line 600 comprise at least two dollies 400-404, as exemplified in FIG. 4 and **FIG.** 6. Here, each dolly 400-404 is configured to move along the assembly line 600 and to carry a respective axle 700-704 of the vehicle 100 being assembled on the assembly line 600, as also exemplified in FIGS. 4 and 6. Each dolly 400-404 comprises a short range wireless transmitter 410, as also exemplified in **FIG. 7****.** Further, the assembly line 600 comprise at least one assembly line tool 500 comprising a short range wireless receiver 510, as also exemplified in FIG. 7. FIG. 5 is an illustrated example of actions, steps or operations which may be performed by the system 800 described below with reference to **FIG. 8****.** The method may comprise the following actions, steps or operations.

**Action 501.** Initially, the system 800 obtains a sequence of dolly identities, IDs, according to an order of sequence of which the at least two dollies 400-404 are moving along the assembly line 600. This is, for example, exemplified and illustrated in FIG. 6 in which each of the dollies 400-404 are ordered in specific sequence on the assembly line 600.

According to some embodiments, this means that the system 800 may comprise or be connected to a dolly handling system 831 and thus be able to receive or retrieve the sequence of dolly identities, IDs, according to an order of sequence of which the at least two dollies 400-404 are moving along the assembly line 600 from the dolly handling system 830. Optionally, the system 800 may be connected to a central or cloud-based data storage facility 831 in which the dolly handling system 831 may store information and thus be able to receive or retrieve the sequence of dolly identities, IDs, according to an order of sequence of which the at least two dollies 400-404 are moving along the assembly line 600 from the central or cloud-based data storage facility 831. The dolly handling system 831 and the central or cloud-based data storage facility 831 are exemplified in FIG. 8.

Such a dolly handling system 830 may be responsible for planning and handling the operations of the dollies on the assembly line 600 in view of the vehicle 100 and vehicle chassis 106 that is planned or scheduled to be assembled. The dolly handling system 830 may be configured to control the dollies such that the correct sequence of dollies are lined up and fitted to receive the vehicle chassis 106 and all of its specific axles 700-704 in accordance with the predetermined axle layout of the vehicle chassis 106, e.g. the axle layout H in FIG. 6. For example, a front axle of the vehicle chassis 106 may always come before the drive axle of the vehicle chassis 106, etc. The predetermined axle layout of the vehicle chassis 106 may be identified by the dolly handling system 830 based on an identified chassis ID of the vehicle chassis 106. Additionally, the dolly handling system 830 may also be arranged to communicate with the short range wireless transmitters 410 of each of the at least two dollies 400-404, for example, in order to scan and check that the correct sequence of dollies are actually lined up on the assembly line 600 according to the planned or scheduled vehicle 100 to be assembled. The short range wireless transmitters 410 of each of the at least two dollies 400-404 may also be referred to as integrated anchors or RFID tags.

Optionally, in some embodiments, the system 800 may also be connected directly to one or more the short range wireless receivers (not shown), such as, e.g. RFID scanners/readers, adapted to scan/read the short range wireless transmitters 410 of each of the at least two dollies 400-404, such as, e.g. integrated anchors or RFID tags in each of the dollies 400-404, on the assembly line 600 prior to reaching the wheel mounting station of the assembly line tool 500 on the assembly line 600. Thus, the system 800 may be arranged to directly scan and check that the correct sequence of dollies are actually lined up on the assembly line 600 according to the planned or scheduled vehicle 100 to be assembled. The vehicle 100, the vehicle chassis 106 and the respective axle 700-704 of the vehicle 100 to be assembled may here be identified by a chassis ID received or retrieved, for example, from the dolly handling system 830, the central or cloud-based data storage facility 831 or other assembly line planning system 831.

**Action 502.** After obtaining the sequence of dolly IDs in Action 501, the system 800 associate each dolly ID in the obtained sequence of dolly IDs with a specific axle in a predetermined axle layout associated with the vehicle 100 based on the order of sequence. This means that the system 800 may, e.g. based on an obtained chassis ID identifying the specific predetermined axle layout associated with the vehicle 100 to be assembled and thus also its specific axle configuration, determine that the first dolly ID in the order of sequence of the obtained sequence of dolly IDs in Action 501 is carrying a front axle according to the specific predetermined axle layout associated with the vehicle 100 to be assembled. Further, the system 800 may also determine that the second and further dolly IDs in the order of sequence of the obtained sequence of dolly IDs in Action 501 is carrying the next axle, e.g. a drive axle (D), pusher axle (P), tag axle (T), etc., according to the specific predetermined axle layout associated with the vehicle 100 to be assembled. This information may thus be collected and stored by the system 800, for example, in a table as illustrated in FIG. 6. It should here be noted that this information may be collected and stored by the dolly handling system 830 prior to the vehicle 100 arriving to the wheel mounting station of the assembly line tool 500 along the assembly line 600, or be collected and stored by the system 800 as the vehicle 100 arrives to the wheel mounting station of the assembly line tool 500 along the assembly line 600.

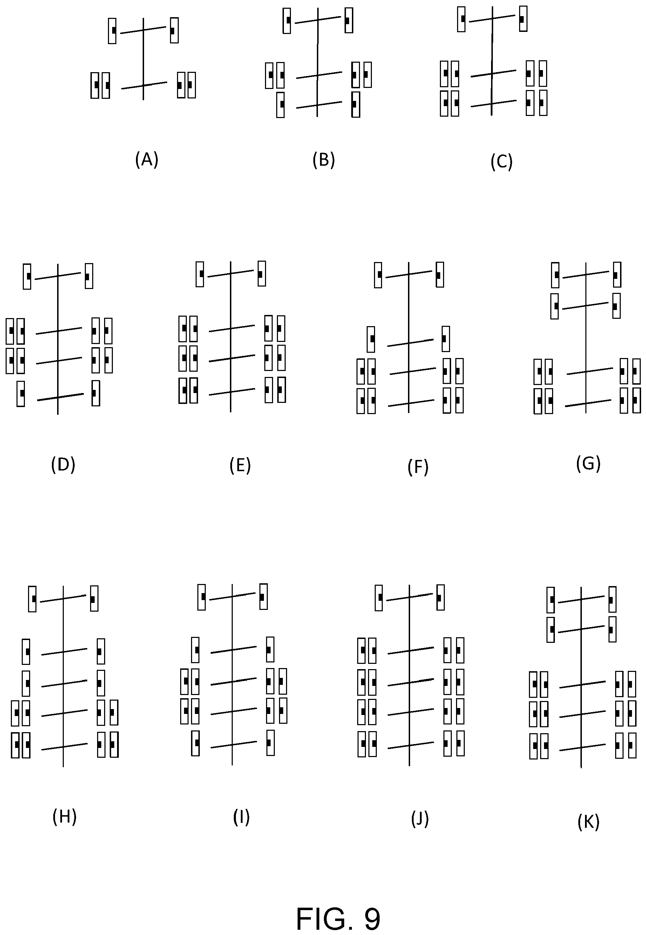

In the example shown in FIG. 6, the vehicle 100 to be assembled on the assembly line 600 and moving along the assembly line 600 has been identified by the system 800 as having the specific predetermined axle layout H based on e.g. its vehicle chassis ID. A number of different predetermined axle layouts A-K are exemplified in **FIG. 9****.** In this example, the specific predetermined axle layout H comprise a 5-axle vehicle comprising a front axle (F1) 700, a first pusher axle (P1) 701, a first drive axle (D1) 702, a second drive axle (D2) 703, and a first tag axle (1) 704. As the sequence of dolly IDs are obtained (column 2 in the table of FIG. 6) in the order of sequence (column 1 in the table of FIG. 6), the system 800 may associate each of the dolly IDs ID_1, ID_3, ID_99, ID_18 and ID_39 of the five (5) dollies 400-404 with the specific axle F1, P1, D1, D2 and T1 of the predetermined axle layout H associated with the vehicle 100 to be assembled.

**Action 503.** Subsequently, e.g. at the wheel mounting station of the assembly line tool 500 along the assembly line 600, the system 800 obtains, from the short range wireless transmitter 410 of at least a first dolly 400 using the short range wireless receiver 510 of the assembly line tool 500, at least the first dolly ID of the at least first dolly 400. This means that, for example, as an operator of the assembly line tool 500 has picked up and is carrying a wheel 110 to be mounted onto an axle 700 of the vehicle 100 to be assembled and is approaching the wheel hub 701 as exemplified in FIG. 7, the system 800 may receive the first dolly ID, e.g. ID_1 in the table shown in FIG. 6, of the first dolly 400 carrying the first axle 700 of the vehicle 100 to be assembled. Thus, the system 800 is able to check the association of the first dolly ID, e.g. in the table shown in FIG. 6, and thus be informed about which specific axle in the predetermined axle layout H associated with the vehicle 100 that the assembly line tool 500 is approaching, e.g. the first front axle (F1) 700. Thus, in some embodiments, the short range wireless receiver 510 of the at least one assembly line tool 500 is configured to receive wireless signals from the short range wireless transmitter 410 of each dolly 400-404. For example, the short range wireless receiver 510 of the assembly line tool 500 may comprise a RFID reader that is reading an RFID tag integrated in each dolly 400-404, wherein each RFID tag is programmed with each corresponding dolly ID.

**Action 504.** After obtaining the at least the first dolly ID of the at least first dolly 400 in Action 503, the system 800 determines a location of the assembly line tool 500 with respect to a specific axle in the predetermined axle layout associated with the vehicle 100 based on the obtained first dolly ID and the specific axle associated thereto. This means, for example, that the system 800 may localize the specific axle in the predetermined axle layout H associated with the vehicle 100 that the assembly line tool 500 is approaching, e.g. the first front axle (F1) 700, and thus be informed about the specific axle in the predetermined axle layout H associated with the vehicle 100 that the wheel 110 is about to be mounted onto. Here, in case information identifying the wheel 110 is already available to the system 800, then this may enable the system 800 to confirm and ensure that the wheel 110 is the wheel that is intended to be mounted on the specific axle, e.g. the first front axle (F1) 700, in the predetermined axle layout H associated with the vehicle 100.

**Action 505.** Optionally, in some embodiments, the system 800 may obtain, from the short range wireless receiver 510 of the assembly line tool 500, tire information from a wheel 110 carried by the at least one assembly line tool 500. This means, for example, that the short range wireless receiver 510 of the assembly line tool 500 may, e.g. via one or more low frequency, LF, antennas, obtain tire information from the wheel 110 as it is picked up and is carried by the assembly line tool 500 to be mounted onto an axle 700-704 of the vehicle 100 to be assembled. This information may then be forwarded by the short range wireless receiver 510 to the system 800. Here, it should be noted that the power levels of the short range wireless receiver 510 of the assembly line tool 500 may advantageously be limited in order to reduce the reading range to only the wheel 110 that is being carried by the assembly line tool 500. Here, according to some embodiments, the tire information may originate from a identity tag 112 and/or a tire sensor 111 located in the wheel 110 or on a rim 113 of the wheel 110. Also, in some embodiments, the tire information may comprise on one or more sensor IDs of the identity tag 112 and/or tire sensor 111, wherein the identity tag 112 is an Radio Frequency Identification, RFID, tag and the tire sensor 111 is a tire pressure/temperature sensor (TPS) of a TPMS/THS system. Furthermore, in some embodiments, the tire information may comprise one or more of: a basis state of a tire pressure/temperature sensor (TPS), a supplier ID, a type of activation/trigger mode ID, tire pressure data, tire temperature data, and battery status of a tire pressure/temperature sensor (TPS).

According to one example, in some embodiments, once the wheel 110 is carried by the assembly line tool 500, the short range wireless receiver 510 of the assembly line tool 500 may activate, identify and read the tire pressure/temperature sensor (TPS) located in the wheel 110 or on a rim 113 of the wheel 110, as exemplified in FIG. 7. The reading of the tire pressure/temperature sensor (TPS) may be performed in order to assess that the tire pressure/temperature sensor (TPS) is functioning properly and has not been damaged during the tire fitting procedure or during its transportation from tire fitting station to the assembly line 600. The reading of the tire pressure/temperature sensor (TPS) may also be performed to additionally check that the tire 114 has correct pressure as was delivered to the tire 114 at the tire fitting station. Here, it should be noted that a temperature reading could also serve as additional check. Hence, the short range wireless receiver 510 of the assembly line tool 500 may comprise means of activating the tire pressure/temperature sensor (TPS). In some embodiments, the tire pressure/temperature sensor (TPS) may be activated by a low frequency, LF, signal. As an example, the LF signal may be a 125 kHz signal. The tire pressure/temperature sensor (TPS) may send its tire information at one of the established industry standard frequencies of 315/433/868/915/1900/2450 MHz to the short range wireless receiver 510 of the assembly line tool 500. Hence, the short range wireless receiver 510 of the assembly line tool 500 may be adapted to receive the tire information at one of the established industry standard frequencies of 315/433/868/915/1900/2450 MHz from the tire pressure/temperature sensor (TPS) of the wheel 110.

In some embodiments, once the wheel 110 is carried by the assembly line tool 500, the short range wireless receiver 510 of the assembly line tool 500 may also identify and read the identity tag 112 located in the wheel 110 or on a rim 113 of the wheel 110, as exemplified in FIG. 7. This means, for example, that the short range wireless receiver 510 of the assembly line tool 500 may comprise a reader of the identity tag 112, e.g. an RFID reader, that is reading the identity tag 112, e.g. an RFID tag, integrated in the tire 114 of the wheel 110. For example, the RFID reader may be adapted to read RFID tags, such as, RFID UHF Class 1 Gen 2 tags according to some ISO standards.

In some embodiments, the system 800 may pair the tire sensors 111, such as, TPS sensors, and identity tags 112, such as, RFIDs, by means of activating the TPS and interrogating the RFID tag of the tire 114 or rim 113 of the wheel 110. Hence, a sensor ID of the tire 114, e.g. RFID tag 112, may be read and paired with the TPS sensor ID of the tire 114, e.g. TPS sensor 111. This RFID/TPS pairing may also, for example, be stored, saved and used later when the vehicle 100 is visiting a workshop. In this case, only the RFID inside tire 114 is needed to be read in order to know the TPS ID inside the tire 114 of the wheel 110. An advantage of such an approach is that the TPS sensor 111 is not required to be activated, but leaving this to the RFID tag which is more easily read.

Another advantage of the system 800 is that each wheel 110 and its tire information are read and paired individually. This means, for example, that for a double/twin mount of two wheels on a drive axle, the inner tire may be read and mounted separately in a first stage, while the outer tire may be read and mounted separately in a second latter stage. In this way, the reading by the short range wireless receiver 510 of the assembly line tool 500 is made much simpler than reading a double/twin wheel combination at the same time. For example, one problem with double/twin mounted wheels is due to random location of RFID tags 112 inside the tires 114. In some circumstances, the RFID tags 112 may be very close to each other in a double/twin mount, which makes it more difficult to decide which RFID tag 112 and TPS ID 111 belongs to which tire 114 and wheel 110.

In some embodiments, the system 800 may pair the tire sensors 111, such as, TPS sensors, and identity tags 112, such as, RFIDs, of twin wheel mounts by reading the inner and outer wheels in sequence. In this case, the inner wheel is naturally always mounted first, while the outer wheel is mounted last. By carrying each wheel on the assembly line tool 500 and having the short range wireless receiver 510 of the assembly line tool 500 reading each wheel while being carried on the assembly line tool 500, the inner wheel already mounted may be distinguished from outer wheel when mounted, even though the system 800 will be receive the same dolly ID when mounting both the inner and outer wheel of the twin wheel mount on the axle of the vehicle 100.

**Action 506.** In case tire information is obtained in Action 505, the system 800 may associate the obtained tire information with the determined location of the assembly line tool 500 with respect to the specific axle in the predetermined axle layout associated with the vehicle 100. This means, for example, that the system 800 may pair the tire sensors 111 and identity tags 112, such as, TPS and RFID sensors, of the wheel 110 to a vehicle axle, e.g. the first front axle (F1) 700, belonging to a specific vehicle chassis ID, e.g. the chassis ID of the vehicle chassis 106, by means of reading of the short range wireless transmitters 410 of the first dolly 400 carrying the axle, i.e. the first front axle (F1) 700.

**Action 507.** As a further option, in some embodiments, the system 800 may generate an alert signal in case the obtained tire information and the specific axle association is not compliant with an approved tire/axle combination. This means, for example, that the system 800 may check that the pairing or association between the tire sensors 111 and identity tags 112, such as, TPS and RFID sensors, of the wheel 110 and the specific axle in the predetermined axle layout associated with the vehicle 100, e.g. the first front axle (F1) 700, is correct and matches with a predetermined and approved tire/axle combination. For example, the wheel 110 comprising the tire sensors 111 and identity tags 112 may be adapted to be mounted onto the specific axle in the predetermined axle layout associated with the vehicle 100, e.g. the first front axle (F1) 700. In this case, the tire/axle combination is approved. However, if the tire sensors 111 and identity tags 112 indicate that the wheel 110 is not adapted to be mounted onto the specific axle in the predetermined axle layout associated with the vehicle 100, e.g. the first front axle (F1) 700, but adapted for another axle in the predetermined axle layout associated with the vehicle 100, e.g. first pusher axle (P1) 701, then the tire/axle combination is not approved and the system 800 may generate an alert signal. The alert signal may be used to notify the operator of the assembly line tool 500 of the fact that the operator is about to mount the wheel 110 on the wrong axle of the vehicle 100.

To perform the method actions in a system 800 for localizing an assembly line tool 500 with respect to at least one axle 700-704 of a vehicle 100 located on an assembly line 600, the system 800 may comprise the following arrangement depicted in FIG 8. FIG 8 shows a schematic block diagram of embodiments of the system 800.

The embodiments of the system 800 described herein may be considered as independent examples, or may be considered in any combination with each other to describe non-limiting examples. It should also be noted that, although not shown in FIG. 8, it should be noted that known conventional features of a system 800, such as, for example, a connection to the mains, network connections (e.g. input/output ports, etc.), etc., may be assumed to be comprised in the system 800 but is not shown or described any further in regards to FIG. 8. The system 800 may comprise one or more centrally located or distributed network unit(s), wherein the system 800 and the one or more network unit(s) may comprise **processing circuitry 810** and a **memory 820.** It should also be noted that some or all of the functionality described in the examples above as being performed by the system 800 may be provided by the processing circuitry 810 executing instructions stored on a computer-readable medium, such as, the memory 820 shown in FIG. 8. The processing circuitry 810 may also comprise an **obtaining module 811,** an **associating module 812,** a **determining module 813,** and a **generating module 814,** each responsible for providing its functionality to support the examples described herein. As exemplified in FIG. 8, the system 800 may also be connected to a dolly handling system 831 or a central or cloud-based data storage facility 830 connected or comprised in the dolly handling system 831. Further, the system 800 may also be connected to an assembly line tool 500 comprising a short range wireless receiver 510.

The system 800 or processing circuitry 810 is configured to, or may comprise the obtaining module 811 configured to, obtain a sequence of dolly identities, IDs, according to an order of sequence of which the at least two dollies 400-404 are moving along the assembly line 600. The system 800 or processing circuitry 810 is also configured to, or may comprise the associating module 812 configured to, associate each dolly ID in the obtained sequence of dolly IDs with a specific axle in a predetermined axle layout associated with the vehicle 100 based on the order of sequence. The system 800 or processing circuitry 810 is further configured to, or may comprise the obtaining module 811 configured to, obtain, from the short range wireless transmitter 410 of at least a first dolly 400 using the short range wireless receiver 510 of the assembly line tool 500, at least a first dolly ID of the at least first dolly 400. Furthermore, the system 800 or processing circuitry 810 is further configured to, or may comprise the determining module 813 configured to, determine a location of the assembly line tool 500 with respect to a specific axle in the predetermined axle layout associated with the vehicle 100 based on the obtained first dolly ID and the specific axle associated thereto. In some embodiments, the at least one assembly line tool 500 may comprise either a trolley, or a spindle tool, configured to carry a wheel 110 for fixation to an axle 700-704 carried by one of the at least two dollies 400-404.

In some embodiments, the system 800 or processing circuitry 810 may further configured to, or may comprise the obtaining module 811 configured to, obtain, from the short range wireless receiver 510 of the assembly line tool 500, tire information from a wheel 110 carried by the at least one assembly line tool 500. In this case, the system 800 or processing circuitry 810 may also configured to, or may comprise the associating module 812 configured to, associate the obtained tire information with the determined location of the assembly line tool 500 with respect to the specific axle in the predetermined axle layout associated with the vehicle 100. In some embodiments, the system 800 or processing circuitry 810 may further configured to, or may comprise the generating module 814 configured to, generate an alert signal in case the obtained tire information and the specific axle association is not compliant with an approved tire/axle combination.

In some embodiments, the tire information may originate from a identity tag 112 and/or a tire sensor 111 located in the wheel 110 or on a rim 113 of the wheel 110. Here, according to some embodiments, tire information may comprise on one or more sensor IDs of the identity tag 112 and/or tire sensor 111, wherein the identity tag 112 is an Radio Frequency Identification, RFID, tag and the tire sensor 111 is a tire pressure/temperature sensor, TPS. Furthermore, in some embodiments, the tire information may comprise one or more of: a basis state of a tire pressure/temperature sensor, TPS, a supplier ID, a type of activation/trigger mode ID, tire pressure data, tire temperature data, and battery status of a tire pressure/temperature sensor, TPS.

In some embodiments, the short range wireless receiver 510 of the at least one assembly line tool 500 may be configured to receive wireless signal from the short range wireless transmitter 410 of each dolly 400-404. In some embodiments, the predetermined axle layout may comprise at least a front axle and a rear axle.

Furthermore, the embodiments for localizing an assembly line tool 500 with respect to at least one axle 700-704 of a vehicle 100 located on an assembly line 600 described above may be implemented through one or more processors, such as the processing circuitry 810 in the system 800 depicted in FIG. 8, together with computer program code for performing the functions and actions of the examples herein. The program code mentioned above may also be provided as a computer program product, for instance in the form of a data carrier carrying computer program code or code means for performing the examples herein when being loaded into the processing circuitry 810 in the system 800. The computer program code may e.g. be provided as pure program code in the network system 800 or on a server and downloaded to the system 800. Thus, it should be noted that the modules of the system 800 may in some examples be implemented as computer programs stored in memory, e.g. in the memory modules 820 in FIG. 8, for execution by processors or processing modules, e.g. the processing circuitry 810 of FIG. 8. Those skilled in the art will also appreciate that the processing circuitry 810 and the memory 820 described above may refer to a combination of analog and digital circuits, and/or one or more processors configured with software and/or firmware, e.g. stored in a memory, that when executed by the one or more processors such as the processing circuitry 810 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A system (800) for localizing an assembly line tool (500) with respect to at least one axle (700-704) of a vehicle (100) located on an assembly line (600), wherein the assembly line (600) comprise
at least two dollies (400-404) each being configured to move along the assembly line (600) and to carry a respective axle (700-704) of the vehicle (100) being assembled on the assembly line (600), wherein each dolly (400-404) comprises a short range wireless transmitter (410), and
at least one assembly line tool (500) comprising a short range wireless receiver (510),
the system (800) comprising processing circuitry (810) being configured to obtain a sequence of dolly identities, IDs, according to an order of sequence of which the at least two dollies (400-404) are moving along the assembly line (600),
associate each dolly ID in the obtained sequence of dolly IDs with a specific axle in a predetermined axle layout associated with the vehicle (100) based on the order of sequence,
obtain, from the short range wireless transmitter (410) of at least a first dolly (400) using the short range wireless receiver (510) of the assembly line tool (500), at least a first dolly ID of the at least first dolly (400), and
determine a location of the assembly line tool (500) with respect to a specific axle in the predetermined axle layout associated with the vehicle (100) based on the obtained first dolly ID and the specific axle associated thereto.

2. The system (800) according to claim 1, wherein the at least one assembly line tool (500) comprises either a trolley, or a spindle tool, configured to carry a wheel (110) for fixation to an axle (700-704) carried by one of the at least two dollies (400-404).

3. The system (800) according to claim 1 or 2, further configured to
obtain, from the short range wireless receiver (510) of the assembly line tool (500), tire information from a wheel (110) carried by the at least one assembly line tool (500), and
associate the obtained tire information with the determined location of the assembly line tool (500) with respect to the specific axle in the predetermined axle layout associated with the vehicle (100).

4. The system (800) according to claim 3, further configured to
generate an alert signal in case the obtained tire information and the specific axle association is not compliant with an approved tire/axle combination.

5. The system (800) according to claim 3 or 4, wherein the tire information originate from a identity tag (112) and/or a tire sensor (111) located in the wheel (110) or on a rim (113) of the wheel (110).

6. The system (800) according to any of claims 3-5, wherein the tire information comprise on one or more sensor IDs of the identity tag (112) and/or tire sensor (111), wherein the identity tag (112) is an Radio Frequency Identification, RFID, tag and the tire sensor (111) is a tire pressure/temperature sensor, TPS.

7. The system (800) according to any of claims 3-6, wherein the tire information comprise one or more of:
- a basis state of a tire pressure/temperature sensor, TPS,
- a supplier ID,
- a type of activation/trigger mode ID,
- tire pressure data,
- tire temperature data, and
- battery status of a tire pressure/temperature sensor, TPS.

8. The system (800) according to any of claims 1-7, wherein the short range wireless receiver (510) of the at least one assembly line tool (500) is configured to receive wireless signal from the short range wireless transmitter (410) of each dolly (400-404).

9. The system (800) according to any of claims 1-8, wherein the predetermined axle layout comprising at least a front axle and a rear axle.

10. The system (800) according to any of claims 1-9, comprising a memory (820) containing instructions executable by the processing circuitry (810).

11. A computer-implemented method for localizing an assembly line tool (500) with respect to at least one axle (700-704) of a vehicle (100) located on an assembly line (600), wherein the assembly line (600) comprise at least two dollies (400-404) each being configured to move along the assembly line (600) and to carry a respective axle (700-704) of the vehicle (100) being assembled on the assembly line (600), wherein each dolly (400-404) comprises a short range wireless transmitter (410), and at least one assembly line tool (500) comprising a short range wireless receiver (510), the method comprising
*obtaining* (501) a sequence of dolly identities, IDs, according to an order of sequence of which the at least two dollies (400-404) are moving along the assembly line (600),
*associating* (502) each dolly ID in the obtained sequence of dolly IDs with a specific axle in a predetermined axle layout associated with the vehicle (100) based on the order of sequence,
*obtaining* (503), from the short range wireless transmitter (410) of a first dolly (400) using the short range wireless receiver (510) of the assembly line tool (500), at least a first dolly ID of the first dolly (400), and
*determining* (504) a location of the assembly line tool (500) with respect to a specific axle in the predetermined axle layout associated with the vehicle (100) based on the obtained first dolly ID and the specific axle associated thereto.

12. The computer-implemented method according to claim 11, further comprising
*obtaining* (505), from the short range wireless receiver (510) of the assembly line tool (500), tire information from a wheel (110) carried by the at least one assembly line tool (500), and
*associating* (506) the obtained tire information with the determined location of the assembly line tool (500) with respect to the specific axle in the predetermined axle layout associated with the vehicle (100).

13. The computer-implemented method according to claim 12, further configured to
*generating* (507) an alert signal in case the obtained tire information and the specific axle association is not compliant with an approved tire/axle combination.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
